# EUROPÄISCHE PATENTANMELDUNG

(11) **EP 0 742 475 A2**
(43) Veröffentlichungstag der Anmeldung: **13.11.1996**
(21) Anmeldenummer: 96107010.9
(22) Anmeldetag: 03.05.1996
(51) Int. Cl.: G03B 21/56

(54) **Projektionswand aus steifer, biegsamer Folie**

(30) Priorität: 08.05.1995 DE 29507358 U; 07.05.1995 DE 19516189
(71) Anmelder: P & I Produktform und Industrietechnik GmbH, 33175 Bad Lippspringe (DE)
(72) Erfinder: Donner, Franz Josef, D-33175 Bad Lippspringe (DE); Sperber, Georg, D-33175 Bad Lippspringe (DE)
(74) Vertreter: Hanewinkel, Lorenz, Dipl.-Phys.

(57) **Zusammenfassung**

Projektionswand zur reflektierenden Wiedergabe von projizierten Bildern mit einer steifen, biegsamen Materialbahn (1), die eine reflektierende Projektionsfläche (2) trägt, wobei die steife aber biegsame Materialbahn, insbes. in Führungsschienen (13, 14), so geführt ist, daß sie sich zumindest teilweise in einem Möbelstück (S) oder in einer Verkleidung so erstreckt, daß in einer ersten Stellung, der Projektionsstellung, die Projektionsfläche (2) frei liegt und die Projektionswand, in eine zweite Stellung verbracht, in dem Möbelstück (S) oder der Verkleidung gewendet oder verdeckt gehalten ist.

## Beschreibung

Die Erfindung betrifft eine Projektionswand zur reflektierenden Wiedergabe von projizierten Bildern mit einer steifen, biegsamen Materialbahn, die eine reflektierende Projektionsfläche in einem Halterahmen trägt.

Aus der GB 861 191 ist eine Projektionswand bekannt, bei der in einem gebogenen Rahmen eine flexible Platte teilzylinderförmig gebogen gehalten ist, auf der mit doppelseitigem Klebstreifen eine Reflexfolie aufgeklebt ist. Diese Projektionswand weist einen etwas zylinderabschnittförmigen Rahmen mit weiteren gekrümmten Stützstreben auf, gegen die die gespannt gebogene Platte in einer dadurch vorgegebenen Krümmung verspannt angelegt worden ist und dort so fixiert ist. Eine Variation der Krümmung ist nicht mehr möglich und beabsichtigt. Der Rahmen ist in seitlichen Stützfüßen schwenkbar gehalten.

Weiterhin ist eine Projektionswand in der DE-PS 885 780 beschrieben. Bei dieser waren auf der flexiblen Materialbahn dünne Reflexfolien rastermäßig aufgeklebt, die keine tragende Funktions hatten. Als Verbesserung dazu wurde dort weiterhin eine Projektionswand aus tragenden Lamellenstäben geoffenbart, die jedoch aufwendig mit Nut und Feder oder Überlappungen zusammengehalten waren, wobei auf einer Lamellenseite eine reflektierenden Oberfläche ausgebildet war. Die zusammengefügten Lamellen wurden eben oder gekrümmt auf einer Halterung als Projektionsschirm gewünschter Krümmung festgelegt, insbes. aufgeklebt. Die Verwendung einer flexiblen Verbindung der steifen Lamellen war nicht vorgesehen.

Weiterhin ist aus der DE OS 23 49 885 eine flexible Projektionswand bekannt, die einerseits mit einer Projektionsfläche und andererseits mit einem Bild unmittelbar oder durch Verbindung mit einem flexiblen Bildträger versehen ist. Durch verschiedenseitiges Aufhängen konnte die eine oder andere Seite genutzt werden.

Weiterhin ist aus der DE-AS 11 29 311 eine flexible Lichtbildleinwand bekannt, die von einer senkrechten Wickeltrommel auf- und abgewickelt wurde, wobei sie durch oben und unten angebrachte gelochte Gurte, die jeweils in einer unteren und einer oberen gekrümmten Gleitschiene geführt waren, zwischen diesen mit Transportsternen gespannt, förderbar gehalten war. Verschieden gekrümmte Gleitschienen ermöglichten die Lichtbildleinwand zwischen diesen umzuwickeln und sie so auf verschiedene Krümmungen umzustellen.

Weiterhin ist aus der DE 32 04 967 C2 eine Projektionswand mit einer flexiblen Bahn bekannt, die in einem Rahmen auf Umlenkrollen motorisch antreibbar gehalten ist und in seitlichen Führungsschienen läuft. Diese flexible Bahn ist einerseits mit einer Reflexschicht und andererseits mit einem Dekor versehen.

Aufgabe der vorliegenden Erfindung ist, die eingangs bezeichnete Projektionswand so zu verbessern, daß sie einfacher zu fertigen ist und in ihrere Krümmung variabel ist, so daß sie unterschiedlichen Zwecken leicht anpaßbar ist.

Die Lösung besteht darin, daß die Platte in dem Halterahmen mindestens einseitig verschieblich in diesem und/oder aus diesem heraus gewölbt gehalten ist.

Vorteilhafte Ausgestaltungen sind in den Unteransprüchen angegeben.

Insbesondere ist die Platte in ihrer Nichtgebrauchsstellung in einem Möbelstück oder einer Decken- oder Wandverkleidung verdeckt oder als Dekor angeordnet ist und von dort in eine Projektionsstellung überzuführen ist. Hierzu wird die steife aber biegsame Materialbahn, insbes. in Führungsschienen, so geführt ist, daß sie sich zumindest teilweise in einem Möbelstück oder in einer Verkleidung so erstreckt, daß in einer ersten Stellung, der Projektionsstellung, die Projektionsfläche frei liegt und die Materialbahn, in eine zweite Stellung verbracht, in dem Möbelstück oder der Verkleidung gewendet oder verdeckt gehalten ist.

Die Flexibilität der Projektionswand ist vorzugsweise nur in einer Richtung der Materialbahn gegeben, in der sie als Hohlreflektor oder beim Transport zwischen den beiden Stellungen gekrümmt wird.

In einer besonderen Ausführung wird die Materialbahn relativ steif und dick gewählt und durch parallele Einkerbungen auf einer Seite bis auf flexible Verbindungsstege geschwächt. Dadurch werden lamellenartige Tragstege, die Trägersegmente, ausgebildet. Die beiden Seiten werden verschieden beschichtet, wobei eine die Reflexschicht und die andere ggf. eine Dekorschicht oder ein Bild trägt. In der Nichtgebrauchsstellung der Projektionswand ist diese verdeckt gehalten, oder es ist nur eine Dekor- oder Bildfläche für den Betrachter sichtbar. Dabei stoßen die Seitenflächen der Trägersegmente vollflächig und spaltlos aneinander, so daß eine einzige unterbrechungslose Dekor- oder Bildfläche von dem Betrachter wahrgenommen wird.

Die Projektionswand ist an zwei Seiten in Führungsschienen in einem Möbelstück verschieblich gelagert, das vorzugsweise mindestens eine Rolle aufweist, von der die Projektionswand angetrieben und/oder um 180 Grad seitenverkehrt und umgelenkt wird. Die Rolle ist mit der Projektionswand kraft und/oder formschlüssig verbunden, und ihre Achse erstreckt sich ggf. parallel zu den Lamellen des Trägers, so daß durch Motorkraft oder Anlegung einer Kraft an einen an der Projektionswand angeordneten Handgriff die Projektionswand durch das Drehen der Rolle in eine Projektionsstellung bzw. in eine Nichtgebrauchsstellung bewegt wird.

Nach einer Ausführung der Erfindung wird die Projektionswand in der Projektionsstellung beidseitig jeweils durch einen gekrümmten Führungsleistenabschnitt gehalten, so daß in der Höhe eine leichte konkave Krümmung der Projektionswand erzielt wird, wodurch die Lichtverteilungscharakteristik für den Beobachter günstig gestaltet ist.

In einer weiteren Ausgestaltung ist ein vollständiger rechteckiger Rahmen vorgesehen, an dessen einer Seite die Spannleiste innerhalb des Rahmens mit Spannschrauben im geringen Abstand vom Rahmen einstellbar gehalten ist. Die Spannleiste und die ihr gegenüberliegende Rahmenleiste weisen jeweils eine Nut auf, in der die Platte gehalten ist, wobei die Nut eine solche Weite aufweist, daß sich die Platte in der gewünschten Weise dort so schräg stellen kann, wie es die jeweilige durch die Spannung bedingte Krümmung erfordert.

Besonders vorteilhaft ist es, sämtliche Rahmenleisten und auch die Spannleiste aus einem geeigneten extrudierten Leichtmetallprofilen herzustellen. Das Rahmenprofil hat zweckmäßig hinterschnittene Nuten, die der Aufnahme von Befestigungsmitteln dienen, mit denen der Rahmen an einem Träger aufgehängt werden kann. Dieser Träger kann beispielsweise an der Wand befestigt sein, oder einen entsprechenden Standfuß aufweisen. Auch der Träger ist zweckmäßig aus Leichtmetall und mit profilierten Nuten versehen, so daß der Rahmen daran in der Höhe leicht veränderbar befestigt werden kann.

Eine weitere vorteilhafte Ausführung besteht darin, daß die Seitenholme des Rahmens unmittelbar die Träger darstellen, die an der Wand befestigt oder mit einem Standfuß versehen werden.

Vereinfachend ist hierbei auch der Rahmenholm eingespart, der parallel zur Spannleiste verlaufen würde; er ist durch kurze Lagerböcke ersetzt, die jeweils an den Trägern verschraubt sind und die die Spannvorrichtung gegenüber der Spannleiste abstützen.

Es ist vorteilhaft vorgesehen, die beiden vertikalen Trägern mit in der Richtung senkrecht zur Platte mehreren parallen Befestigungsnuten zu versehen, so daß je nach der relativen Anordnung der Rahmenleiste und der Spannleiste in diesen Nuten, die Platte eine unterschiedliche Neigung erhält. Da somit die Höhe, die Neigung und die Krümmung der Platte leicht einstellbar sind, läßt sich jeweils eine günstige Lichtverteilung für verschiedene Beobachter in den verschiedensten räumlichen Anordnungen zur Projektionswand erreichen.

Ausführungsbeispiele der Erfindung werden anhand der Figuren 1 bis 12 im folgenden näher beschrieben.
- Fig. 1: zeigt eine Seitenansicht einer Projektionswand in lamellierter Ausführung;
- Fig. 2: zeigt eine Projektionswand integriert in einem Schrank und eine Projektoranordnung;
- Fig. 3: zeigt eine weitere Ausführung einer Projektionsanordnung mit einer im Schrank integrierten, lamellierten Bildwand;
- Fig. 4: zeigt ein Pult mit einer Projektionswand;Fig. 5 zeigt eine Rechteckrahmenanordnung in Aufsicht;
- Fig. 6: zeigt eine Seitenansicht zu Fig. 1;
- Fig. 7: zeigt vergrößerte Details der Schnitte II-II zu Fig. 1;
- Fig. 8: zeigt eine Anordnung mit 2 Trägern;
- Fig. 9 bis 11: zeigen unterschiedliche Neigungsstellungen der Projektionswand;
- Fig. 12: zeigt eine Spannvorrichtung im Detail.

Die erfindungsgemäße Projektionswand kommt in Büros zur Anwendung, in denen ein geringes Platzangebot besteht und es darauf ankommt, schnell eine Projektionsfläche einzurichten. Insbes. in privaten Räumlichkeiten kann die Projektionswand auch vorteilhaft eingesetzt werden.

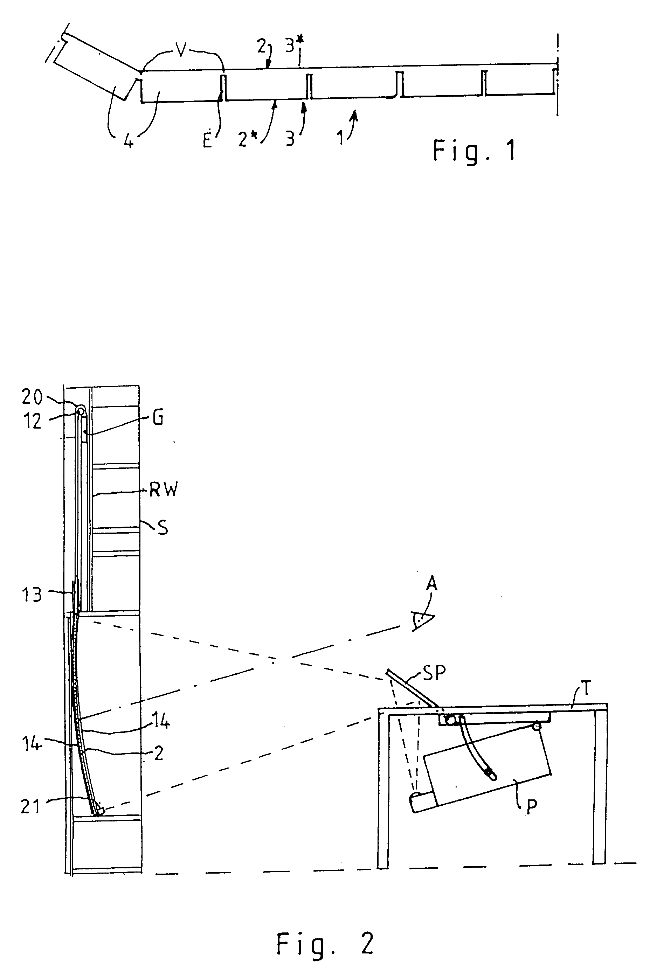

Die Projektionswand 1 besteht, gem. Fig. 1, aus einer Materialbahn mit einer Projektionsfläche 2 und ggf. einer Dekor- und/oder Bildfläche 3, die durch eine Beschichtung auf einer Seite der Materialbahn aufgebracht ist.

In einer besonderen Ausführung ist die Materialbahn, die ein bis einige Millimeter dick ist, von einer Seite mit parallelen Einkerbungen E, so daß dazwischen lamellenartige Trägersegmente 4 verbleiben, die somit durch eine dünne besonders biegsame Verbindung V scharnierartig verbunden sind. Die Segmente 4 weisen vorzugsweise eine Dicke von 5 mm und eine Breite von 15 mm auf. Die Länge der Trägersegmente 4 erstreckt sich über die gesamte Breite der Projektionswand.

Die Projektionsfläche 2 kann durch eine reflektierende Ausrüstung der Materialbahn erzeugt sein, oder diese ist zur Verbesserung der Projektionseigenschaften mit einer bekannten reflektierenden Pigmentierung beschichtet. Die Pigmentierung ist vorzugsweise mittels Sprühen, Siebdrucken, Rakeln oder Drucken aufgetragen. Sie setzt sich beispielsweise zusammen aus weißen Pigmenten, metallischen Glanzkörpern und/oder Glasperlen.

Wenn die Einkerbungen E sehr schmal sind, ist die aus den Segmenten 4 gebildete Fläche, insbesondere, wenn sie konkav gewölbt ist, praktisch homogen, so daß auch diese Seite als die Projektionsfläche 2* genutzt werden kann und die andere als Dekorfläche 3*, falls das vorgesehen ist.

Die Einkerbungen lassen sich auch schräg zur Oberfläche einbringen, so daß die frei stehenden leistenartigen Bereiche etwa Parallelogrammform aufweisen und somit die Einschnitte bei senkrechter Betrachtung der Oberfläche nicht durchgehend eingesehen werden können.

Eine weitere vorteilhafte Variante ist es, die Oberfläche 2, 2*, die der Projektion dient, mit einer Feinstrukturierung zu versehen, die eine Konzentration ders Reflexlichtes auf die Augenhöhe eines Betrachters gerichtet vornimmt. Hierzu sind keilförmige Profilierungen nach Art einer Fresnellinsenstruktur vorzusehen. Ist eine Zylinderlinsenartige Struktur erwünscht, so sind die Keilspitzen etwa zur Mittellinie der Projektionsfläche gerichtet und die Neigung der Keile nimmt von der Mittellinie aus zu. Eine derartig präparierte Projektionsfläche ist in der Projektionsstellung plan anzuordnen und benötigt deshalb seitlich keine oder nur ganz einfache Führungs- und Haltemittel.

Die Steifigkeit der Materialbahn (1) läßt sich insbesondere bei großen oder freitragenden Projektionswänden durch bekannte Faser- oder Gewebeeinlagen in den Kunststoff erreichen. Hierbei ist es bevorzugt, die Ausrüstung mit verstärkter Faserführung in einer Richtung zu wählen, da damit bei guter Biegsamkeit in der Längsrichtung die Steifigkeit in der Querrichtung der Projektionswand gesteigert werden kann, so daß eine Lamellierung entfallen kann.

Figur 2 zeigt einen vertikalen Schnitt durch einen Schrank S. In einem Oberschrank sind hinter einer Rückwand RW beidseitig jeweils ein Abschnitt der Führungsleisten 13 und im oberen Bereich eine horizontalen Umlenkrolle 12 angeordnet, über die Seile 20 geführt sind, die mit einem Ende oben an der Projektionswand befestigt sind und an ihren anderen Enden mit einem Gegengewicht G belastet sind. Die Materialbahn ist i. a. nicht gekerbt vorgesehen, da sie nur in der Projektionsstellungwenig gekrümmt wird und ansonsten gerade geführt ist. Die Krümmung gibt ihr die Steifigkeit in der horizontalen während des Gebrauchs.

Unter dem Oberschrank ist etwa in der Höhe der Augen A eines sitzenden Beobachters , bei einer Neigung seiner Sehachse um etwa 15° gegen die Horizontale zentriert zu dieser, jeweils in der Projektionsstellung die Projektionsfläche 2 der Projektionswand angeordnet, wobei diese jeweils seitlich in den Führungsschienen 14 gehalten ist. Diese sind im Höhenverlauf für den Beobachter konkav ausge-bildet, so daß die Helligkeitsverteilung des projizierten Bildes günstig ausgenutzt ist. Am unteren Ende der Projektionswand befindet sich ein Griff 21 mit dem die Projektionswand in die verdeckte Stellung hinter die Rückwand RW verbracht werden kann. Das Schrankfach ist dann frei, und es kann bespielsweise im hinteren Bereich eine Dekoration sichtbar untergebracht sein.

Der Projektor P ist beispielsweise mittig unter einem Tisch T hängend angeordnet und vorzugsweise mit einer Schwenkeinrichtung ausgerüstet, sowie mit einem aus dem Tisch herausschwenkbaren, verstellbaren Spiegel SP oder einer verschwenkbaren Optik ausgerüstet, daß das Bild in der gewünschten Weise unverzerrt auf der Projektionsfläche 2 abgebildet wird. Diese Anordnung des Projektors P beläßt die Fußfreiheit unter dem Tisch, wenn der Projektor in die obere Stellung verschwenkt ist, so daß er geschützt untergebracht ist und keinen Stellraum benötigt.

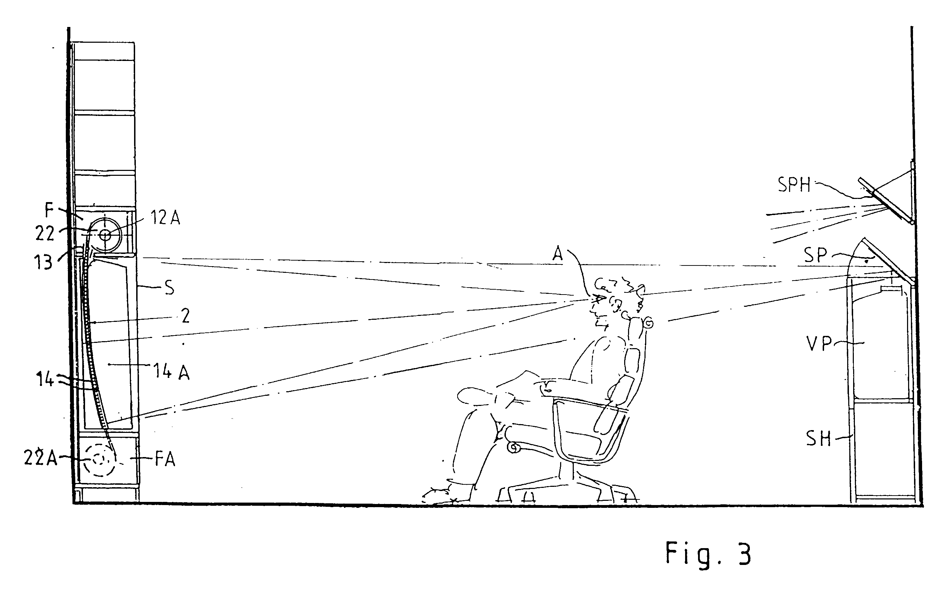

Figur 3 zeigt eine weitere Anordnung einer Projektionswand in einem Wohnbereich für einen mit Augen A sitzenden Beobachter. In einer Schrankwand S ist die Projektionswand in ihrer Gebrauchsstellung in konkaven Führungsschienen 14 gehalten, und oberhalb des Beobachtungsbereiches befindet sich im Schrank S ein Fach F mit einer Wickelrolle 12A, auf der in der Nichtgebrauchsstellung die lamellierte, in der Segmentrichtung flexible, Projektionswand als Wickel 22 aufgebracht ist. An die Führungsschiene 14 schließt sich eine kurzer Führungsschienenabschnitt 13 an; er reicht bis in das Fach F hinein. Die Schienen 14 sind vorzugsweise mit den Seitenteilen 14A integriert hergestellt und bilden z.B. einen tiefgezogenen Einsatz in denn Schrankabschnitt.

Alternativ ist gestrichelt gezeichnet ein Fach 11A unterhalb des Projektionsbereiches angeordnet, wo der Wickel 22A der Projektionswand in der Nichtgebrauchsstellung untergebracht ist.

Das Fach F, FA kann vorteilhaft mit der Anordnung der Seitenteile 14A als ein kompletter Einsatz für einen Schrank oder ein Regal oder als selbständige Einheit ausgebildet werden.

Die Anordnung der konkav gewölbten Bildwand ist wiederum auf einem leicht nach unten blickend sitzenden Beobachter ausgerichtet. Für die Projektion ist ein Vertikalprojektor VP hinter dem Beobachter angeordnet, wobei der Strahlengang des Projektors nach oben und über einen ausklappbaren Spiegel SP oder einen hängend angeordneten Umlenkspiegel SPH auf die Projektionswand geleitet ist. Es sind Justagemittel am Projektor PV und/oder am Spiegel SP, SPH vorgesehen, die eine scharfe und verzerrungsfreie Projektion ermöglichen.

Selbstverständlich kann die Umlenkung der Projektionswand auch unterhalb des Projektionsbereiches vorgesehen sein, oder es können Wickeleinrichtungen oberhalb oder unterhalb des Projektionsbereiches eingerichtet sein. Der Schrank kann auch halbhoch sein, wenn der Speicherbereich der Projektionswand unten liegt.

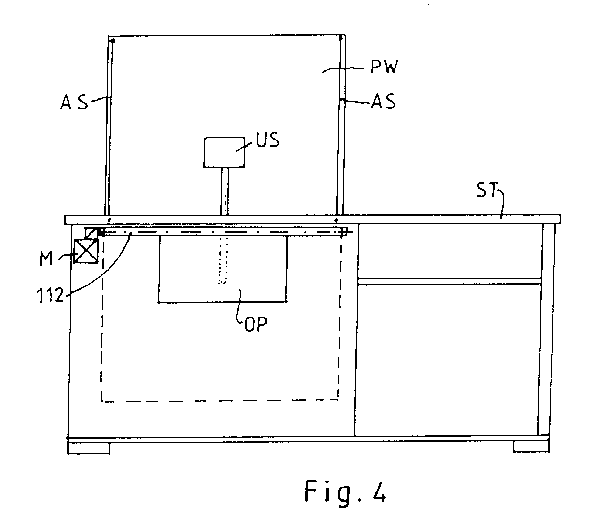

Der Schrank S kann eine relativ geringe Tiefe aufweisen und in eine Wandvertäfelung oder in eine Mauernische eingearbeit sein. Auch genügt gemäß Fig. 4 eine Anrichte, ein Scheibtich ST oder ein Rednerpult, um die relativ steife, ggf. durch Anschlagseile AS in der Höhe leicht gekrümmt gehaltene, Projektionswand PW in der Nichtgebrauchsstellung unterzubringen. Vorzugsweise ragt die Projektionswand in der Projektionsstellung freitragend aus der Pultplatte heraus, wobei sie in einer Hemmung am Zurückfallen gehindert ist oder durch das Rollenpaaar 112 gehalten ist, das zu einem motorischen Antrieb M oder einem Kurbelantrieb verbunden ist. Durch den Grad des Heraushebens läßt sich die Wölbung der Projektionswand jeweils festlegen. Unter oder in der Tischplatte kann ein Overheadprojektor OP und/oder ein Fernsehprojektor oder Projektionsmonitor untergebracht sein, dessen nach oben gerichteter Strahlengang jeweils über einen ausklappbaren und oder ausfahrbaren Spiegel US auf die Projektionswand PW umgelenkt wird. Ist das Möbelstück ein Rednerpult, so ist die Projektionswand bevorzugt als Durchlicht-Projektionsscheibe mit Dispersionsmaterial ausgerüstet. Es kann auch sowohl eine Durchlichtprojektionsscheibe als auch eine Reflektorprojektionsscheibe in dem Pult ST angeordnet sein, von denen nach Bedarf die eine oder die andere in die Projektionsstellung angehoben wird.

Die verschiedenen Anordnungen der Projektoren P, PV, OP und der Projektionswand lassen sich beliebig kombinieren. Die Projektoranordnungen sind insbesondere für Projektionsfernseher oder -monitore geeignet, bei denen keine körperlichen Bildmaterialien zugeführt werden müssen. Ein zugehöriger Videorekorder läßt sich bei geeigneter Verkabelung an geeigneter zugänglicher Stelle anordnen. Auch die üblichen Lautsprecher lassen sich durch geeignete Signalübertragung über Kabel oder mit Infrarot von dem Projektor, der den Videoempfänger gewöhlich umfaßt, speisen.

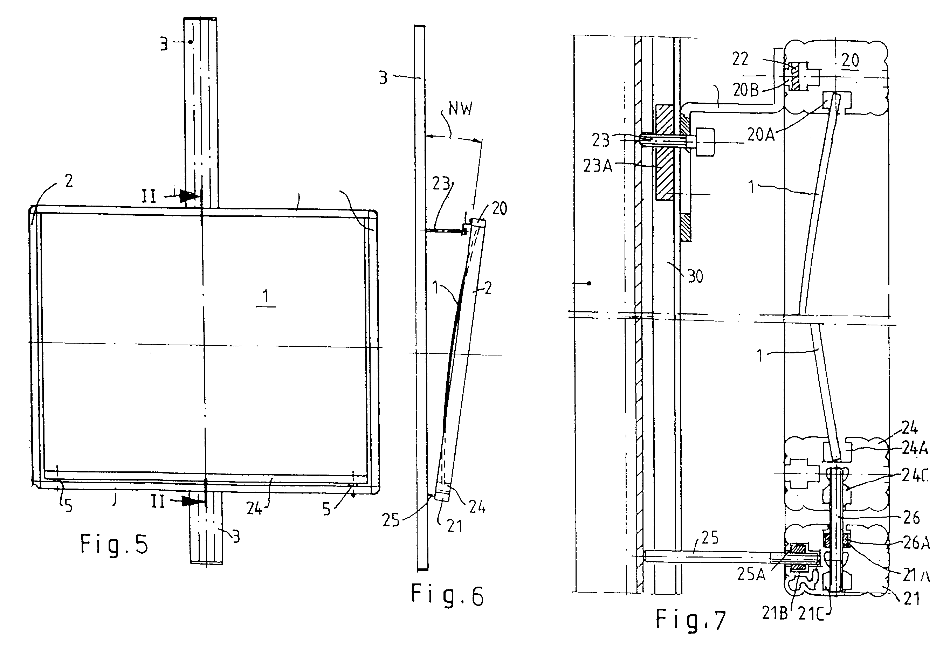

Figur 5 zeigt einen Rahmen aus vier Rahmenleisten 200, 201, 210 die rückwärtig an einem Vertikalträger 3 gehalten sind. Benachbart zu der einen Rahmenleiste 210 ist eine Spannleiste 24 mit zwei Spannschrauben 5 gehalten, welche die Spannleiste 24 gegen die Platte 1 der Projektionswand drücken. Die Platte 1 ist jeweils in Nuten der Rahmenleiste 200 und der Spannleiste 24 gehalten und an den anderen beiden Rändern im Rahmen völlig freiliegend.

Figur 6 zeigt eine Seitenansicht der Projektionswand, die an einem Vertikalträger 30 mit einem Neigungswinkel NW gehalten ist. Man erkennt, daß die Platte 1 gekrümmt ist und rückseitig aus dem Rahmen 200, 201, 210 herausragt. Die untere Rahmenleiste 210 ist mit Stützbolzen 25 an dem Vertikalträger 30 abgestützt, und die obere Rahmenleiste 200 ist mit Haltebügeln 220 und Stützbolzen 23 zum Vertikalträger 30 beabstandet höheneinstellbar verschraubt gehalten. Durch geeignete Wahl des Stützbolzens 23 oder durch eine Schraubkombination läßt sich der Abstand und somit der Neigung des Rahmens unterschiedlich einstellen.

Figur 7 zeigt den oberen und unteren Querschnitt durch die horizontalen Rahmenleisten 200, 210, sowie die Spannleiste 24. Diesen Leisten 200, 210, 24 weisen an verschiedenen Seiten hinterschnittene Nuten 20A, 20B, 21A, 21B, 21C, 24A, 24C auf. Dies dienen zum einen der Einfassung der Platte 1, wobei diese frei neigbar gehalten ist, so daß sich die Kürmmung bis in die Halterung hinein jeweils ausbilden kann. In den rückseitigen Nuten 20B, 21B sind jeweils Vierkantmuttern 22M, 25A gehalten, an denen die Befestigungsmittel 220, 25 angeschraubt sind. Der Befestigungswinkel 220 ist an einer Schraube 23 aufgehängt, welche mit einer Einsteckmutter 23A in dem vertikalen Träger 30 in einer hinterschnittenen Nut 300 in der gewünschten Höhe befestigt ist. Die untere Rahmenleiste 210 ist lediglich mit einem Stützbolzen 25 in der Nut 300 abgestützt, so daß es für eine Höheneinstellung des Rahmens genügt, die Schraube 23 zu verschieben und zu fixieren.

Zum Verspannen der Spannleiste 24 mit dem unteren Rahmenholm 210 ist eine Spannschraube 26 vorgesehen, welche in einer zugehörigen Mutter 26A einstellbar gehalten ist. Der untere Rahmenholm ist zwischen den Nuten 21A, 21C vertikal durchbohrt, so daß die Schraube von unten zugänglich ist. Ihr anderes Ende stützt sich in einer Führungsnut 24C in der Spannleiste 24 ab.

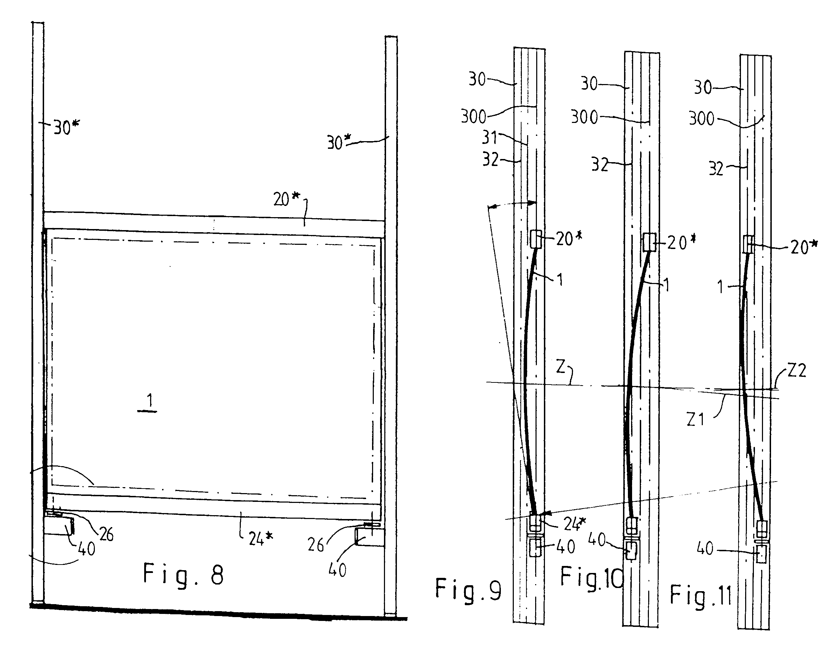

Figur 8 zeigt eine Konstruktion mit noch weniger Teilen. Sie besteht aus zwei vertikalen Träger 30* mit einer Querverstrebung durch den oberen Rahmenholm 20*. Im unteren Bereich sind jeweils an den Trägern 30* Lagerböcke 40 angeschraubt, welche die Spannschrauben 26 aufnehmen, die die Spannleiste 24* gegen die Platte 1 und diese wiederum gegen den oberen Querholm 20* pressen. Es ist vorgesehen, daß die Lagerböcke 40 und der obere Holm 20* in den Trägern 30* höhenverstellbar verschraubt sind.

Wie die Figuren 9 bis 11 in einem Vertikalschnitt jeweils zeigen, sind in den Trägern 30* jeweils parallele Nuten 300 bis 320 ausgebildet, in denen die obere Querleiste 20* und die Lagerböcke 40 jeweils verschraubt sind. Sind die Befestigungen jeweils in der gleichen Nut 300 vorgenommen, so steht die Platte 1 mit ihrere Zentralachse Z horinzontal, und sind die Befestigungspunkte in unterschiedlichen Nuten 300 - 320 angeordnet, so weist die jeweilige Zentralachse Z1, Z2 der Platte 1 eine unterschiedliche Neigung über oder unter die Horizontale auf.

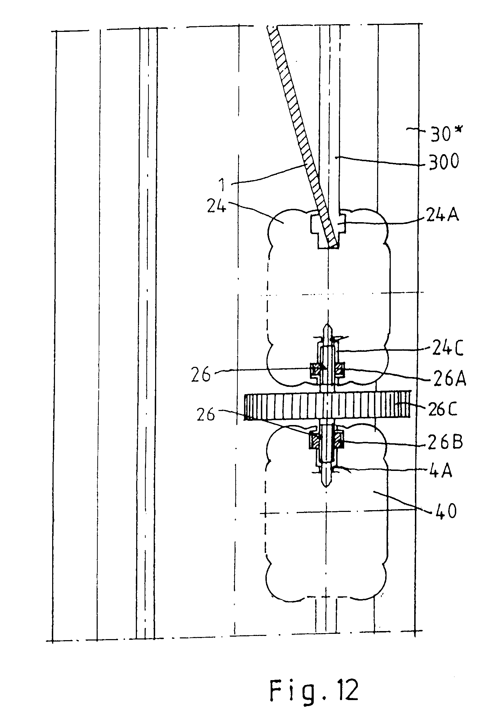

Figur 12 zeigt vergrößert einen Schnitt durch die Spannleiste 24*, in deren Nut 24A die Platte 1 verspannt gehalten ist und in deren Nut 24C die Spannschraube 26 abgestützt ist, welche andererseits in einer Nut 4A des Lagerbockes 40 abgestützt ist. Um einen möglichst großen Hub der Verspannvorrichtung zu erreichen, ist in den Nuten 24C, 4A jeweils eine gegenläufig ausgebildete Mutter 26A, 26B gehalten, in der die Spannschraube 26 mit entsprechenden Rechts- bzw. Linksgewindeabschnitten eingeschraubt ist. Die Spannschraube 26 ist mittig mit einem Einstellkranz 26C fest verbunden.

Sowohl die Rahmenleisten 20*, die Spannleiste 24* und der Bock 40 als auch die Träger 30* sind vorteilhaft aus Leichtmetalllprofilen hergestellt. Diese können weitere nicht dargestellte Hohlräume zum Zwecke der Material- und Gewichtsersparnis enthalten. Es genügt ein einziges Leistenprofil.

Die Projektionsfläche der Platte 1 kann durch eine bekannte dispergierend reflektierende oder transluzierende Ausrüstung der Materialbahn erzeugt sein, oder diese ist zur Verbesserunge der lichttechnischen Eigenschaften mit einer bekannten dispergierend reflektierenden Pigmentierung beschichtet. Die Pigmentierung ist vorzugsweise mittels Sprühen, Siebdrucken, Rakeln oder Drucken aufgetragen. Sie setzt sich beispielsweise zusammen aus weißen Pigmenten, metallischen Glanzkörpern und/oder Glasperlen. Wenn die Projektionsfläche für eine Durchlichtprojektion vorsehen ist, so wird zweckmäßig das Kunststoffmaterial der Platte mit einem Dispersionsmittel in bekannter Weise gefüllt. Die Steifigkeit der Platte 1 läßt sich insbesondere bei großen oder freitragenden Projektionswänden bei geringer Dicke und relativ geringem Gewicht durch bekannte Faser- oder Gewebeeinlagen in den Kunststoff erreichen. Hierbei ist es bevorzugt, die Ausrüstung mit verstärkter Faserführung in einer Richtung zu wählen, da damit bei guter Biegsamkeit in der Längsrichtung eine höhere Steifigkeit in der Querrichtung der Projektionswand gesteigert werden kann. Selbstverständlich kann die Anordnung auch um 90 Grad gedreht Verwendung finden, also eine Krümmung in der Horizontalen vorgenommen werden.

## Patentansprüche

1. Projektionswand zur reflektierenden Wiedergabe von projizierten Bildern mit einer steifen, biegsamen Materialbahn (B), die eine reflektierende Projektionsfläche (2, 2*) in einem Halterahmen trägt, dadurch gekennzeichnet, daß die Platte (1) in dem Halterahmen mindestens einseitig verschieblich und/oder aus diesem heraus gewölbt gehalten ist.

2. Projektionswand nach Anspruch 1, dadurch gekennzeichnet, daß die steife aber biegsame Materialbahn, insbes. in Führungsschienen (13, 14), so geführt ist, daß sie sich zumindest teilweise in einem Möbelstück (S,ST) oder in einer Verkleidung so erstreckt, daß in einer ersten Stellung, der Projektionsstellung, die Projektionsfläche (2, 2*) frei liegt und die Projektionswand, in eine zweite Stellung verbracht, in dem Möbelstück (S, ST) oder der Verkleidung gewendet oder verdeckt gehalten ist.

3. Projektionswand nach Anspruch 2, dadurch gekennzeichnet, daß die Materialbahn (B) auf einer Seite mit parallelen Einschnitten (E) versehen ist, so daß dadurch entstehende lamellenartige Trägersegmente (4) durch biegsame scharnierartige Verbindungen (V) zusammenhängen und die Projektionfläche (2, 2*) auf der glatt durchgehenden flexiblen Seite oder auf der lamellierten Seite durch eine reflektierende Beschichtung ausgebildet ist oder durch eine reflektierende Ausrüstung der Materialbahn als Auflicht oder als Durchlicht Dispersor ausgebildet ist.

4. Projektionswand nach einem der Ansprüche 1 bis 3, dadurch gekennzeichnet, daß die Kunststoffmaterialbahn mit Faser- oder Gewebeeinlagen ausgerüstet ist, und zwar vorzugsweise so, daß sie in einer Richtung flexibler als in der anderen ist.

5. Projektionswand nach einem der Ansprüche 2 bis 4, dadurch gekennzeichnet, daß die Projektionsfläche (2, 2*) mit einer das Reflexlicht konzentrierenden Pofilierung versehen ist.

6. Projektionswand nach einem der Ansprüche 2 - 5, dadurch gekennzeichnet, daß mindestens eine Rolle (12, 12A, 12B, 112) zur Umlenkung und/oder zum Aufwickeln der Projektionswand, ggf. achsparallel zu den Trägersegmenten (4), in dem Möbelstück (S, ST) oder der Verkleidung angeordnet ist.

7. Projektionswand nach Anspruch 6, dadurch gekennzeichnet, daß mindestens eine Rolle (12, 12A, 12B, 112) zum Verbringen der Projektionswand zwischen den beiden Stellungen mit einem Elektromotor M antriebsmäßig verbunden ist, wobei die Rolle (12, 12A, 12B, 112) form- und/oder reibschlüssig oder durch Seile (20) mit der Projektionswand verbunden ist.

8. Projektionswand nach einem der Ansprüche 2 - 7, dadurch gekennzeichnet, daß die Führungsschienenabschnitte (14, 14B), in denen die Projektionswand in der Projektionsstellung gehalten ist, quer zur Führungsrichtung gebogen ausgebildet sind, so daß die darin gehaltene Projektionsfläche (2, 2*) zum Betrachter hin konkav in der Höhe gewölbt ist.

9. Projektionswand nach einem der Ansprüche 2 - 8, dadurch gekennzeichnet, daß die Materialbahn, insbes. durch die Führungsschienen
(13, 14, 14B), in einer derartigen Bahn geführt sind, daß sie in der Projektionsstellung bei frei nach außen gerichteter Projektionsfläche (2, 2*) in ersten Führungsschienenabschnitten (14, 14B) innerhalb eines Regales oder eines Schrankes (S) etwas unterhalb der Augenhöhe A eines sitzenden Beobachters angeordnet ist und in der zweiten Stellung in den anderen Führungsschienenabschnitten verdeckt unterhalb, seitlich, oberhalb und/oder hinter dem Bereich der Projektionsstellung verdeckt angeordnet ist.

10. Projektionswand nach einem der Ansprüche 2 bis 9, dadurch gekennzeichnet, daß sie in der zweiten Stellung als Rückwand gewendet in dem Schrank (S) angeordnet ist oder hinter einer Rückwand (RW1) und ggf. teilweise einer Deck- oder Bodenwandung (DW) des Schrankes (S) sich erstreckend oder gewickelt angeordnet gehalten ist.

11. Projektionswand nach einem der Ansprüche 2 bis 8, dadurch gekennzeichnet, daß sie in der zweiten Stellung hintenseitig an oder in einem Möbelstück (S, ST), insbes. einem Halbschrank, einem Schreibtisch oder einem Pult (ST), angeordnet ist, und sich in der Gebrauchsstellung über dessen Tischplatte, in der Höhe gewölbt, herausgeschoben oder herausgezogen erstreckt und ggf. in dem Möbelstück (ST) ein Overheadprojektor (OP) angeordnet ist.

12. Projektionsanordnung mit einer Projektionswand nach einem der Ansprüche 2 bis 11, dadurch gekennzeichnet, daß der Projektor (P, PV, PV1) in einem Möbelstück angeordnet ist und sein Strahlengang über mindestens einen Umlenkspiegel (SP, SPH, WS) auf die Projektionswand umgelenkt ist.

13. Projektionsanordnung nach Anspruch 12, dadurch gekennzeichnet, daß der Projektor (P) neigungsverstellbar flach unter einer Tischplatte eines Tisches (T) angeordnet ist.

14. Projektionsanordnung nach Anspruch 12, dadurch gekennzeichnet, daß der Projektor (PV) vertikal angeordnet ist und der Umlenkspiegel (SP) aus einem den Projektor (PV) umgebenden Möbelstück (SH) herausklappbar ist oder über diesem verschwenkbar justierbar angeordnet ist.

15. Projektionsanordnung nach Anspruch 14, dadurch gekennzeichnet, daß der Umlenkspiegel (SP, SPH, WS) ein Wölbspiegel ein Hohlspiegel oder ein Fresnelspiegel ist.

16. Projektionswand nach Anspruch 1, dadurch gekennzeichnet, daß die Platte (1) an gegenüberliegenden Randbereichen einerseits in einer Rahmenleiste (200, 20*) eines Rahmens (201, 200, 210; 30*, 20*) und andererseits in einer Spannleiste (24; 24*) gehalten ist, die an dem Rahmen (201, 200, 210; 30*, 20*) mit Spannschrauben (5, 26) so abgestützt gehalten ist, daß die Platte (1) vorgespannt eine vorgegebene Krümmung aufweist und daß der Rahmen (201, 200, 210; 30*, 20*) eben ausgebildet ist und die Platte (1) in diesem und/oder aus diesem heraus gewölbt gehalten ist.

17. Projektionswand nach Anspruch 16, dadurch gekennzeichnet, daß die Platte (1) von einem rechteckigen Rahmen (201, 200, 210) umgeben ist, in dem die Spannleiste (24) mit Spannschrauben (5) lageverschieblich gehalten ist.

18. Projektionswand nach Anspruch 17, dadurch gekennzeichnet, daß der Rahmen untenseitig mit Stützbolzen (25) und obenseitig mit einem höheneinstellbaren und ggf. längeneinstellbaren Abstandshalter (23) an einem Vertikalträger (30) befestigt ist.

19. Projektionswand nach einem der Ansprüche 16 bis 18, dadurch gekennzeichnet, daß der Rahmen (220, 210), die Stützleiste (24) und/oder der Träger (30) aus Leichtmetallprofilen bestehen, welche hinterschnittene Nuten (20B, 300, 21A, 21B) zur Aufnahme von Befestigungsmuttern (22M, 23A, 25A, 26A) aufweisen, sowie Nuten (20A, 24A) zur Einfassung der Platten (1) sowie zur Aufnahme der Spannmittel (26) aufweisen.

20. Projektionswand nach Anspruch 16, dadurch gekennzeichnet, daß die Rahmenleiste (20*) zwischen zwei Trägern (30*) höhenverstellbar gehalten ist und die Spannleiste (24*) auf Lagerböcken (4) verspannt gehalten ist, welche an den Trägern (3*) höhenverstellbar verschraubt sind.

21. Projektionswand nach Anspruch 20, dadurch gekennzeichnet daß, die Träger (30*) mehrere parallele Nuten (300 - 320) enthalten, die in der Projektionsrichtung hintereinanderliegen, in denen die Rahmenleiste (20*) und die Lagerböcke (40) jeweils so unterschiedlich zugeordnet verschraubt werden können, daß die Platte (1) bezüglich ihrer Zentralachse (Z, Z1, Z2) unterschiedlich geneigt ist.

22. Projektionswand nach Anspruch 20 oder 21, dadurch gekennzeichnet, daß die Spannschrauben (26) jeweils Rechts- und Linksgewinde aufweisen und in entsprechende Mutern (26A, 26B) in der Spannleiste (24*) und im Lagerbock (40) eingeschraubt sind.

23. Projektionswand nach Anspruch 22, dadurch gekennzeichnet, daß auf der Spannschraube (26) ein Rändelrad (26C) befestigt ist.

24. Projektionswand nach einem der Ansprüche 20 bis 23, dadurch gekennzeichnet, daß die Träger (30*) und/oder die Rahmenleiste (20*) und/oder die Spannleiste (24*) aus Leichtmetallprofilmaterialien bestehen, die hinterschnittene Nuten (300, 310, 320, 24C, 4A) zur Aufnahme von Befestigungsmuttern (26A, 26B) aufweisen und Nuten (24A) zum Halten der Platte (1) aufweisen.

25. Projektionswand nach einem der vorstehenden Ansprüche, dadurch gekennzeichnet, daß die Platte aus einem Kunststoffmaterial besteht, welches mit einem dispergierenden Material zur Durchlichtprojektion oder zur Auflichtprojektion ausgerüstet ist oder mit einer reflektierenden weißen Pigmentschicht insbesondere mit Metall- und Glasperleneinlagerungen beschichtet ist.
